# EUROPÄISCHE PATENTSCHRIFT

(11) **EP 1 533 072 B1**
(45) Veröffentlichungstag und Bekanntmachung des Hinweises auf die Patenterteilung: **04.03.2009**
(21) Anmeldenummer: 04024359.4
(22) Anmeldetag: 13.10.2004
(51) Int. Cl.: B23Q 3/10

(54) **Elementsystem zum Aufbauen von Haltevorrichtungen**
Element system to build holding devices
Système à éléments pour construire un dispositif de serrage

(30) Priorität: 13.11.2003 DE 10353008
(43) Veröffentlichungstag der Anmeldung: 25.05.2005
(73) Patentinhaber: Bayerische Motoren Werke Aktiengesellschaft, 80809 München (DE)
(72) Erfinder: Bordon, Gerd, 86156 Augsburg (DE); Donath, Norbert, 82343 Pöcking (DE); Wandschneider, Martin, 81737 München (DE)

(56) Entgegenhaltungen:
- EP-A- 0 310 937
- DE-U- 29 612 937
- FR-A- 2 543 467
- US-A- 5 242 043
- US-B1- 6 191 983

## Beschreibung

Die Erfindung bezieht sich auf eine Vorrichtung der im Oberbegriff des ersten Anspruchs angegebenen Art, (siehe z.B. FR-A-2 543 467).

Eine gattungsgemäße Anordnung ist beispielsweise aus der DE 35 38 034 C1 bekannt. Dort wird als Profil ein Vierkantkörper verwendet, der auf allen Seiten mit Nuten versehen ist. Daran werden weitere Profile oder auch Halteelemente mit Hilfe zweier als getrennte Bauteile ausgestaltete Halbschalen gehalten, die über Schrauben miteinander verbunden werden und so eine kraftschlüssige Klemmung erzeugen. Ein derartiges Elementsystem ist wegen des nicht formschlüssigen Anbindens der Profile untereinander, einer geringen Wiederholgenauigkeit in der Anbindung und wegen der Verwendung zweier Halbschalen nachteilig.

Aufgabe der vorliegenden Erfindung ist es, hier Abhilfe zu schaffen und ein Elementsystem vorzuschlagen, das einfach aufgebaut ist und dabei eine hohe Wiederholgenauigkeit in der Anbringung der Halteelemente gewährleistet.

Diese Aufgabe wird erfindungsgemäß durch die Merkmale des ersten Anspruchs gelöst.

Durch die Verwendung eines Vielkantprofiles mit umfänglichen Rasterbohrungen und dem Umgreifen eines jeden Verknüpfungselementes auf mindestens drei Seiten wird eine formschlüssige Anbindung der Komponenten über drei Kanten erreicht mit höchster Wiederholgenauigkeit. Daneben weist diese Konstruktion eine hohe Biegeund Torsionssteifigkeit bei geringem Gewicht auf. Da nur eine Halbschale, bevorzugt als integraler Bestandteil des Verknüpfungselementes, verwendet wird, können auf einer Höhe an dem Profil an unterschiedlichen Seiten auch unterschiedliche Verknüpfungselemente oder weitere Profile angebracht werden.

Gemäß Anspruch 2 wird bevorzugt als Vielkantprofil ein Achtkantprofil verwendet.

Die Ansprüche 3 und 4 beschreiben vorteilhafte Verbindungselemente der Verknüpfungselemente mit dem Achtkantprofil. Beide sind kostengünstig und gewichtsreduziert.

Durch die Weiterbildung nach Anspruch 5 wird die Wiederholgenauigkeit weiter gesteigert.

Gerade bei langen Profilen wird durch die Weiterbildung nach Anspruch 6 die Biegeund Torsionssteifigkeit bei geringem Gewicht weiter erhöht.

Im Folgenden wird die Erfindung anhand eines bevorzugten Ausführungsbeispiels näher dargestellt. Es stellen dar:
- Figur 1: eine perspektivische Ansicht eines ersten Profils;
- Figur 2: einen Querschnitt durch das Profil gemäß Figur 1;
- Figur 3: eine zweite Ausführung des Profils;
- Figur 4: einen Querschnitt durch die zweite Ausführung.

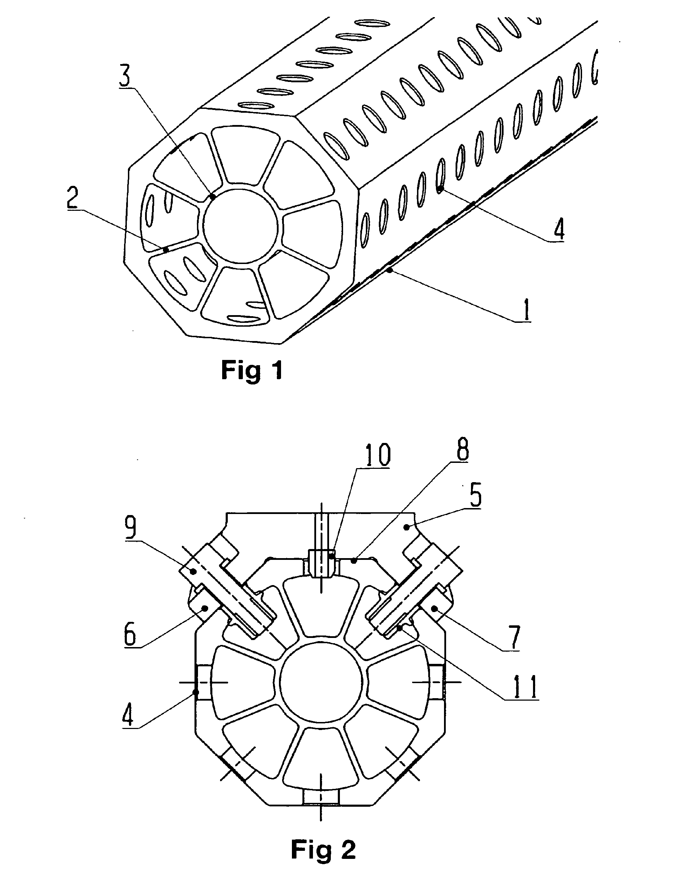

In Figur 1 ist ein Achtkantprofil 1 dargestellt, das in seinem Inneren Versteifungsrippen 2 aufweist, die sich an einem inneren Hohlkern 3 abstützen.

Auf dem Umfang des Achtkantprofils 1 sind auf jeder Seite eine Reihe von Bohrungen 4 mit gleichem Abstand und gleichem Durchmesser angeordnet.

Um an diesem Achtkantprofil 1 ein Verknüpfungselement 5 zu befestigen, das beispielsweise ein weiteres Profil trägt oder mit einer Haltevorrichtung für Werkstücke ausgerüstet ist, weist das Verknüpfungselement 5 seitlich angeordnete Flansche 6 und 7 auf. Die Flansche 6 und 7 sowie die Grundseite 8 des Verknüpfungselementes 5 korrespondieren zu dem Achtkantprofil 1. Sie umfassen drei Seiten des Achtkantprofils 1, wobei in den Flanschen 6 und 7 Befestigungsschrauben 9 zum Befestigen in den Bohrungen 4 dienen. Hierzu sind entweder die Bohrungen 4 mit Innengewinde versehen oder es werden in die Bohrungen Blindnietmuttern 11 eingebracht, die durch geeignete Maßnahmen verdrehsicher gehalten werden.

Zur Erhöhung der Positioniergenauigkeit weist das Verknüpfungselement 5 weiterhin einen Zentrierstift 10 auf, der in die eingeschlossene Bohrung 4 zwischen den Schrauben 9 eingreift.

Somit ist das Verknüpfungselement 5 wiederholgenau und formschlüssig sicher gehalten.

Die in Figur 1 und 2 gezeigte Anordnung eignet sich insbesondere für lange Hohlprofile, die aufgrund der Versteifungsrippen eine hohe Biege- und Torsionssteifigkeit bei geringem Gewicht aufweisen.

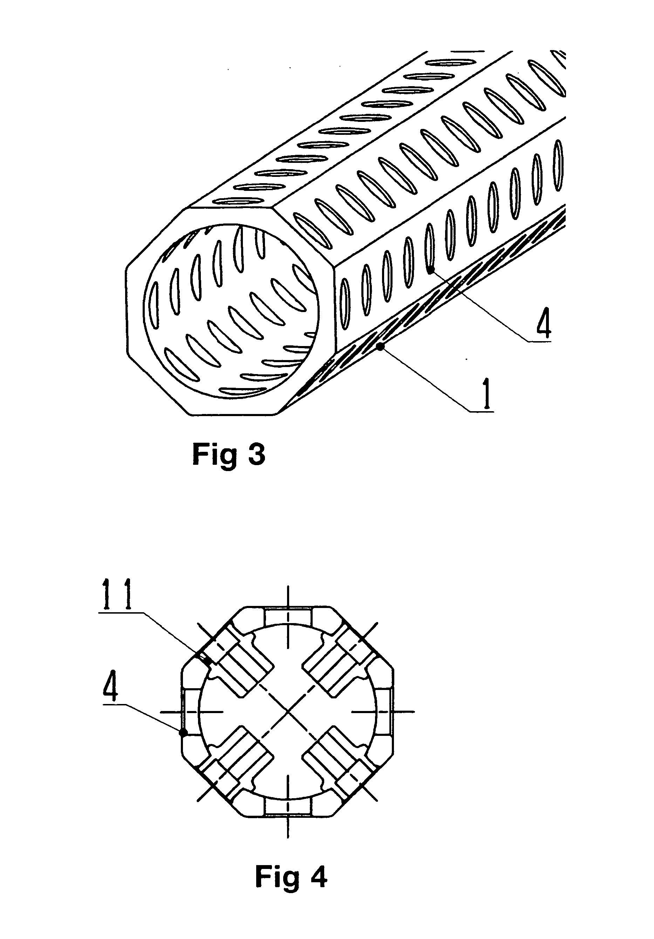

In Figur 3 und 4 ist eine alternative Ausführung des Achtkantprofiles 1 dargestellt. Hier wird auf die Versteifungsrippen 2 verzichtet, ansonsten ist es 1 identisch mit dem Achtkantprofil 1 aus Figur 1 aufgebaut.

Wie Figur 4 zeigt, können auch hier Blindnietmuttern 11 in die Bohrungen 4 eingesetzt werden. Genauso gut ist es denkbar, in die Bohrungen 4 Gewindebohrungen einzubringen.

Zur Gewichtsreduzierung ist es vorteilhaft, die Profile aus Aluminium herzustellen, jedoch sind auch andere Materialien - je nach Einsatzfall - denkbar.

## Patentansprüche

1. Elementsystem zum Aufbauen von Haltevorrichtungen für Werkstücke, bestehend aus einer Grundplatte und daran befestigten Profilen unterschiedlicher Länge, an denen Verknüpfungselemente befestigt werden,
**dadurch gekennzeichnet, dass** das Profil aus einem Achtkantprofil (1) besteht, das auf seinem Umfang Bohrungen (4) zum Befestigen der Verknüpfungselemente (5) aufweist und dass jedes Verknüpfungselement (5) auf mindestens drei benachbarten Seiten des Achtkantprofils (1) formschlüssig festgelegt ist.

2. Elementsystem nach Anspruch 1,
**dadurch gekennzeichnet, dass** die Bohrungen (4) als Gewindebohrungen zum Befestigen der Verknüpfungselemente (5) ausgebildet sind.

3. Elementsystem nach Anspruch 1,
**dadurch gekennzeichnet, dass** die Bohrungen (4) zur Aufnahme von Blindnietmuttern (11) dienen.

4. Elementsystem nach einem der vorangegangenen Ansprüche,
**dadurch gekennzeichnet, dass** das Verknüpfungselement (5) einen Zentrierstift (10) aufweist, der zwischen den Befestigungselementen in eine Bohrung (4) eingreift.

5. Elementsystem nach einem der vorangegangenen Ansprüche,
**dadurch gekennzeichnet, dass** das Achtkantprofil (1) in seinem Inneren Versteifungsrippen (2) aufweist.

## Claims

1. An element system for constructing holding devices for workpieces, comprising a base plate and profiles of different lengths fastened thereto, to which linking elements are fastened,
**characterised in that** the profile comprises an octagonal profile (1), which, on its periphery, has bores (4) to fasten the linking elements (5) and that each linking element (5) is positively fixed on at least three adjacent sides of the octagonal profile (1).

2. An element system according to claim 1,
**characterised in that** the bores (4) are configured as threaded bores for fastening the linking elements (5).

3. An element system according to claim 1,
**characterised in that** the bores (4) are used to receive blind rivet nuts (11).

4. An element system according to any one of the preceding claims,
**characterised in that** the linking element (5) has a centring pin (10) which engages between the fastening elements in a bore (4).

5. An element system according to any one of the preceding claims,
**characterised in that** the octagonal profile (1) has reinforcement ribs (2) in its interior.

## Revendications

1. Système d'éléments pour construire des dispositifs de fixation de pièces, composé d'une plaque de base à laquelle sont fixés des profilés de longueurs différentes auxquels on fixe des éléments de combinaison,
**caractérisé en ce que**
le profil est un profil (1) à section octogonale, dont la périphérie comporte des perçages (4) pour fixer les éléments de combinaison (5), et chaque élément de combinaison (5) est fixé par une liaison par la forme sur au moins trois côtés voisins du profilé octogonal (1).

2. Système d'éléments selon la revendication 1,
**caractérisé en ce que**
les perçages (4) sont des taraudages pour fixer des éléments de combinaison (5).

3. Système d'éléments selon la revendication 1,
**caractérisé en ce que**
les perçages (4) servent à recevoir des rivets-écrous borgnes (11).

4. Système d'éléments selon les revendications précédentes,
**caractérisé en ce que**
l'élément de combinaison (5) comporte une broche de centrage (10) qui pénètre dans un perçage (4) entre les éléments de fixation.

5. Système d'éléments selon les revendications précédentes,
**caractérisé en ce que**
le profilé octogonal (1) comporte intérieurement des nervures de rigidifi-cation (2).
